# EUROPEAN PATENT SPECIFICATION

(11) **EP 1 521 322 B1**
(45) Date of publication and mention of the grant of the patent: **09.04.2008**
(21) Application number: 04252702.8
(22) Date of filing: 10.05.2004
(51) Int. Cl.: H01M 8/02

(54) **Direct liquid feed fuel cell stack**
Brennstoffzellenstapel mit flüssiger Brennstoffzufuhr
Assemblage de piles à combustible à alimentation liquide

(30) Priority: 01.10.2003 KR 2003068322
(43) Date of publication of application: 06.04.2005
(73) Proprietor: Samsung SDI Co., Ltd., Suwon-si, Gyeonggi-do (KR)
(72) Inventor: Choi, Kyoung-hwan 114-1201 Daehan Dawoo Apt, Suwon-si, Gyeonggi-do (KR)
(74) Representative: Anderson, James Edward George

(56) References cited:
- WO-A-03/026049
- CA-A1- 2 451 096
- DE-A1- 19 718 970
- US-A- 6 080 503

## Description

The present invention relates to a direct liquid feed fuel cell stack, and more particularly, to a sealing structure between bipolar plates and MEA (Membrane Electrode Assembly) included in a Direct Methanol Fuel Cell.

A Direct Methanol Fuel Cell (DMFC) is a device for producing electricity. The DMFC has high energy density and power density by an electro-chemical reaction between an organic compound fuel such as methanol or ethanol and an oxidant i.e., oxygen. Because it uses a liquid fuel directly, the DMFC does not require peripheral devices such as a fuel reformer, and has the advantages of easy storing and instant supplying the liquid fuel.

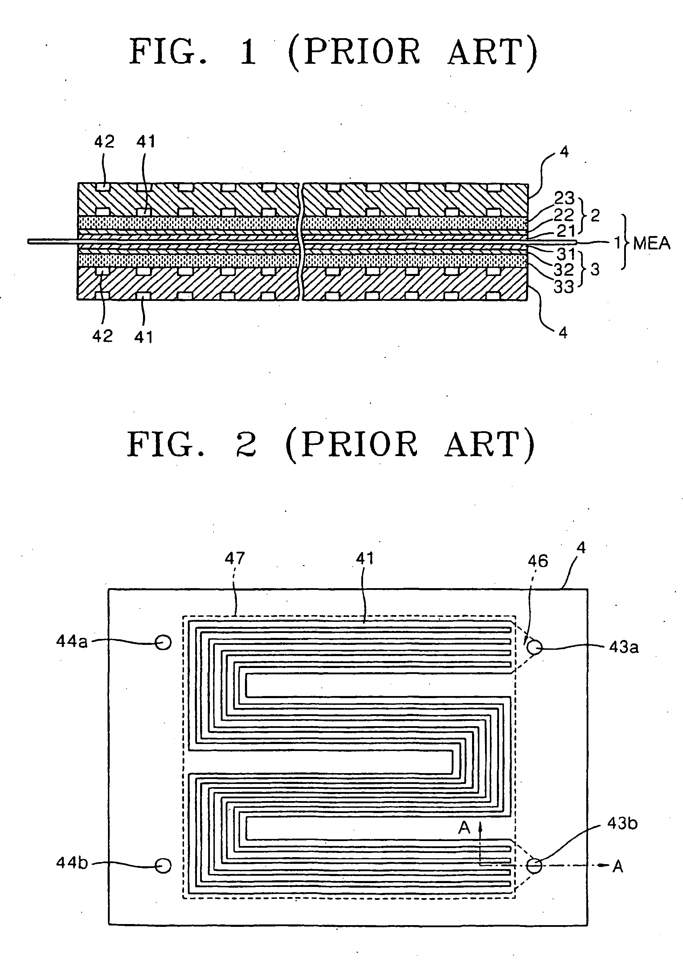

As depicted in FIG. 1, a single cell of the DMFC includes a membrane electrode assembly (MEA) having an electrolyte membrane 1 between an anode 2 and a cathode 3. The anode 2 and the cathode 3 comprise fuel diffusion layers 22 and 32 for fuel supply and diffusion, catalyst layers 21 and 31 for oxidation and reduction reaction of the fuel, and electrode supporting layers 23 and 33, respectively. A catalyst formed of a precious metal having a superior catalytic characteristic at a low temperature i.e., platinum is used for an electrode reaction. Alternatively, in order to avoid a catalyst poisoning by a by-product of the reaction i.e., CO, an alloyed catalyst containing a transition metal such as ruthenium, rhodium, osmium, or nickel is used. A wet proofed carbon paper or a carbon cloth for easy fuel supply and discharge of the reaction products is used for an electrode supporting layer. An electrolyte membrane is a polymer membrane having a thickness in a range of 50~200 µm. A proton exchange membrane with ionic conductivity may be used as the electrolyte membrane.

The electrochemical reaction in the DMFC, which uses a mixture of methanol and water as fuel, comprises an anode reaction where the fuel is oxidized and a cathode reaction where oxygen is reduced.

Each reaction can be described as:

[Reaction 1] CH₃OH + H₂O = CO₂ + 6H⁺ + 6e⁻ (Anode reaction)

[Reaction 2] 3/2 O₂ + 6H⁺ + 6e⁻ = 3H₂O (Cathode reaction)

[Reaction 3] CH₃OH + 3/2 O₂ = 2 H₂O + CO₂ (Overall reaction)

At the anode 2 where an oxidation reaction (reaction 1) occurs, one carbon dioxide, six protons, and six electrons are produced. Produced protons move to the cathode 3 through a proton exchange membrane 1. At the cathode 3 where a reduction reaction (reaction 2) takes place, water is produced by the reduction reaction between protons, electrons transferred from an external circuit, and oxygen. Accordingly, as the result of an overall reaction (reaction 3), water and carbon dioxide are produced from the reaction between methanol and oxygen.

A theoretical voltage from a single cell of a DMFC is approximately 1.2 V. However, an open circuit voltage at ambient temperature and atmospheric pressure falls below 1 V due to a voltage drop caused by an activation overvoltage and a resistance overvoltage. In reality, an actual operating voltage lies in the range of 0.4-0.6 V. Therefore, to obtain higher voltages, a plurality of single cells connected in series is required.

A fuel cell stack is formed by stacking several single cells connected in series electrically. Adjacent single cells are electrically connected to each other by an electric conductive bipolar plate 4 interposed between the single cells.

The bipolar plate 4 can be formed of a graphite block which has high mechanical strength, high electrical conductivity, and good machining property. And a block a composite material containing a metal or a polymer can also be used as the bipolar plate 4.

Fuel flow channels 41 and 42 are formed on the both faces of the bipolar plate: channels 41 for supplying fuel i.e., methanol on one face that contacts the anode 2, and flow channels 42 for supplying air on the opposite face that contacts the cathode 3. A bipolar plate 4 interposed between the fuel cell stack has a channel for supplying fuel on a face and a channel for supplying air on an opposite face. At the top and bottom of the fuel cell stack, end plates (not shown), i.e., monopolar plates are placed. Flow channel (refer to 41 and 42 in FIG. 1) for supplying fuel or air to an adjacent single cell is formed on the end plate.

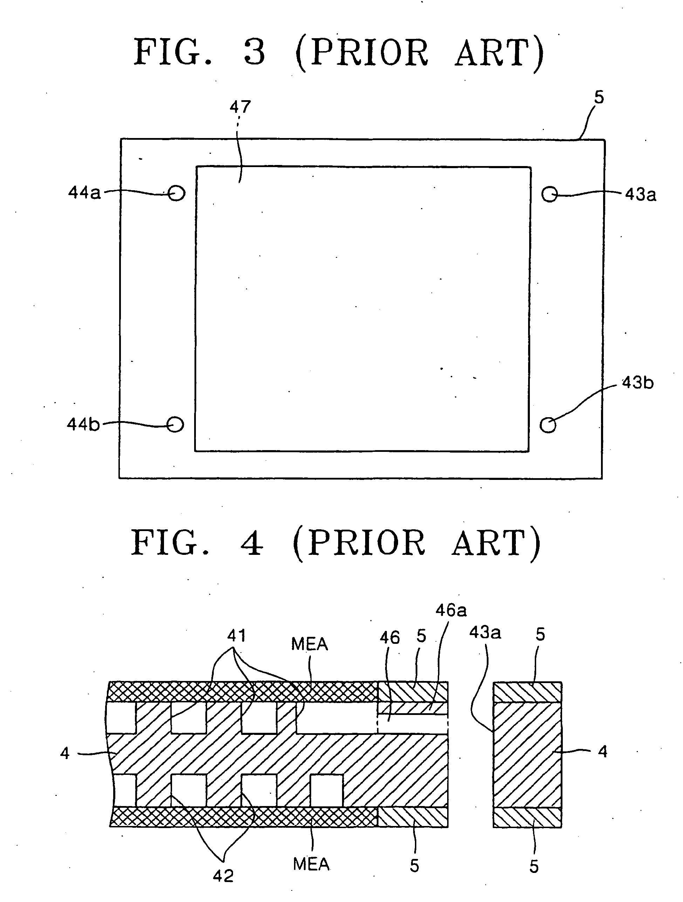

FIG. 2 is a plan view showing a surface of a conventional bipolar plate having a liquid fuel flow channels. FIG. 3 is a plan view of a gasket attached to the surface of the bipolar plates as depicted in FIG. 2. The same numerals are used in FIGS. 1 and 2.

Referring to FIG. 2, a plurality of fuel channels 41 having a serpentine shape and openings at their upper surface are formed on an electrode region 47 of a conventional bipolar plate 4 where a MEA will be located. At an outer region of the electrode region 47, manifolds 46 connecting to an inlet and an outlet of the fuel channels 41, and fuel flow holes 43a, 43b, 44a, and 44b communicating to the manifolds 46 through the bipolar plate 4 are formed. The fuel flow holes 43a, 43b, 44a, and 44b comprise an inlet 43a and an outlet 43b of liquid fuel, and an inlet 44a and outlet 44b of an oxidant. The manifolds 46 connecting the liquid fuel flow holes 43a and 43b to the plurality of fuel channels 41 are formed inside the bipolar plate 4 without exposing from a surface of the bipolar plate 4.

Referring to FIG. 3, the electrode region 47 and fuel flow holes region of the bipolar plate 4 are opened in a gasket 5.

FIG. 4 is a cross-sectional view of a gasket 5 and a MEA which are located on the bipolar plate 4 taken along a line A-A in FIG. 2.

Referring to FIG. 4, the MEA locates on the fuel channels 41 and 42 i.e., electrode region, and the gasket 5 covers on the rest of the region of the bipolar plate 4 except the fuel flow holes 43a, 43b, 44a, and 44b. The gasket 5 blocks the leaking in and out of the fuel and air.

The conventional bipolar plate 4 depicted in FIG. 4 has a relatively thick thickness of about 5-10 mm since the manifold 46 is formed inside the bipolar plate 4. Reference numeral 46a refers to a portion of the bipolar plate 4 covering an upper face of the manifold 46.

For a smaller and lighter fuel cell, a thickness of the bipolar plate should be thinner, such as approximately 1-2 mm. Accordingly, the bipolar plate 4 depicted in FIGS. 2 through 4 can not be further used for the smaller and lighter fuel cell. For this reason, a structure exposing the manifolds is proposed. An example of this structure is described in U.S. Patent Nos. 6,284,401, 5,879,826, and 6,146,780.

FIG. 5 is a schematic plan view of a bipolar plate depicted in the U.S. Patent No. 6,284,401. The same reference numerals are used to the like elements in FIGS. 1 through 4, and the detailed descriptions are omitted.

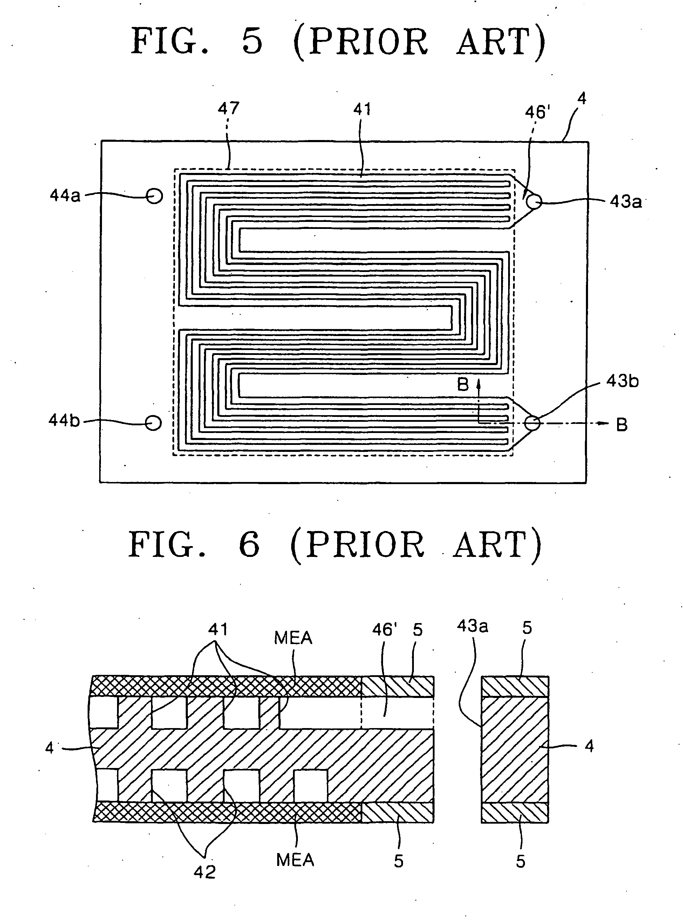

Referring to FIG. 5, a plurality of fuel channels 41, having a serpentine shape and openings at their upper surface, are formed on an electrode region 47 of a bipolar plate 4 where the MEA will be located. At another region of the electrode region 47, manifolds 46' connecting to an inlet and an outlet of the fuel channels 41, and fuel flow holes 43a, 43b, 44a, and 44b communicating to manifolds 46' through the bipolar plate 4 are formed. The fuel flow holes 43a, 43b, 44a, and 44b comprise an inlet 43a and an outlet 43b of liquid fuel, and an inlet 44a and outlet 44b of an oxidant.

The manifolds 46' connecting the fuel flow holes 43a and 43b to the plurality of fuel channels 41 are formed on the bipolar plate 4 exposing from the surface of the bipolar plate 4.

FIG. 6 is a cross-section view of a gasket 5 and an MEA which are located on the bipolar plate 4 taken along the line B-B in FIG. 5.

Referring to FIG. 6, the MEA locates on the fuel channels 41 and 42 i.e., on the electrode region 47 in FIG.5, and the gasket 5 locates on the rest of the region except the fuel flow holes 43a, 43b, 44a, and 44b. The gasket 5 also locates on the manifold 46' for blocking the fuel leakage.

However, for fabricating a fuel cell stack, a plurality of bipolar plates 4 and a plurality of MEAs are compressed under a high pressure. In this case, the gasket 5 located on the manifold 46' is prone to bend, that causes leaking the fuel through an upper part of the gasket 5.

In order to solve the bending problem of the gasket 5, the installation of a bridge piece connecting to the gasket 5 on the manifold 46' reduces a thickness of the bipolar plate 4 as disclosed in U.S. Patent No. 6,410,179.

However, due to difficultness in manufacturing and installation, and a weak mechanical strength of the bridge piece, fabricating a fuel cell stack by pressing the gasket and the bipolar plates at a high pressure is not easy. Moreover, this high pressure method is difficult to apply for fabricating a thin bipolar plate having a thickness of 1-2 mm, which is the aim of the present invention.

US 6080503 discloses a direct liquid feed fuel cell stack in which each membrane electrode assembly is adhesively bonded to adjacent plates. The adhesive may be accommodated in grooves formed in the plates so as to ensure that a sufficient quantity of adhesive is present The adhesive may provide a substantially gas and liquid-tight seal around the perimeter of the electrochemically active area.

According to the invention, there is provided a direct liquid feed fuel cell stack comprising: a plurality of stacked bipolar plates having an electrode region provided with fuel channels, a plurality of fuel flow holes for supplying fuel or oxidant to the fuel channels, and a groove enclosing the electrode region; and a plurality of membrane electrode assemblies arranged between the bipolar plates in the electrode region, each membrane electrode assembly comprising an electrolyte membrane and electrodes, the electrodes comprising an anode and a cathode on respective faces of the electrolyte membrane, the membrane electrode assembly having holes in the electrolyte membrane and in the electrodes aligned with the fuel flow holes in the bipolar plates, wherein one of the electrodes holes aligned with each fuel flow hole is formed with a larger diameter than the diameter of the respective fuel flow hole; a first sealing member formed on the groove; and a second sealing member formed on the walls of each electrode hole having the larger diameter so as to surround a respective fuel flow hole, and so that the respective fuel flow hole does not communicate with the electrode hole having the larger diameter.

Preferably, the first sealing member is formed by depositing a liquid sealing material.

Preferably, ones of the fuel flow holes connect to other ones of the fuel flow holes by a plurality of fuel channels, manifolds are formed between the fuel flow holes and the fuel channels, and the upper part of fuel channels and the manifolds are covered by the corresponding anode or the cathode.

Preferably, grooves are formed around the fuel flow holes not communicating to the fuel channels on each face of the bipolar plate.

Preferably, uppermost and lowermost bipolar plates have fuel flow channels only on a face that contacts to the MEA.

The second sealing member is preferably formed by depositing a liquid sealing material on a step, wherein the step is formed by a diameter difference between the larger electrode hole and the electrolyte membrane hole.

According to another exemplary embodiment of the present invention, a diameter of the electrolyte membrane hole is bigger than the diameter of the fuel flow hole, and the second sealing member that surrounds the fuel flow hole is formed on a wall of the larger electrode hole and the electrolyte membrane hole.

According to still another exemplary embodiment of the present invention, a diameter of the electrolyte membrane hole is smaller than the diameter of the larger electrode hole.

The present invention thus provides a direct liquid feed fuel cell stack that can prevent fuel leakage by forming fuel flow holes in the electrode region of a bipolar plate to cover manifold region with an electrode.

The present invention also provides a direct liquid feed fuel cell disposed a sealing member between the fuel flow hole and an MEA by depositing a sealing material in stead of a conventional gasket.
FIG. 1 is a cross-sectional view of a single cell of a direct liquid feed fuel cell;
FIG. 2 is a plan view of a conventional bipolar plate;
FIG. 3 is a plan view of a gasket attached to a surface of the bipolar plate depicted in FIG. 2;
FIG. 4 is a cross-sectional view of the conventional bipolar plate taken along a line A-A in FIG. 2;
FIG. 5 is plan view of a bipolar plate depicted in U.S. Patent No. 6,284,401;
FIG. 6 is a cross-sectional view of a bipolar plate including gaskets and MEAs, taken along a line B-B in FIG. 5;
FIG. 7 is a cross-sectional view of a fuel cell stack according to an embodiment of the present invention;
FIG. 8 is a plan view of the bipolar plate of FIG. 7;
FIG. 9 is a photo of the bipolar plate of FIG. 7;
FIG. 10 is a cross-sectional view of a single cell showing a sealing structure from a fuel flow hole to a MEA of FIG. 7;
FIG. 11 is a magnified drawing of D of FIG. 10;
FIG. 12 is a cross-sectional view of a single cell according to a modified version showing a sealing structure from the fuel flow hole to the MEA of FIG. 10,
FIG. 13 is a plan view of a bipolar plate according to another embodiment of the present invention; and
FIG. 14 is a photo of a MEA coated with liquid silicon around fuel flow holes.

Hereinafter, a direct liquid feed fuel cell stack according to the embodiments of the present invention will be described more fully with reference to the accompanying drawings.

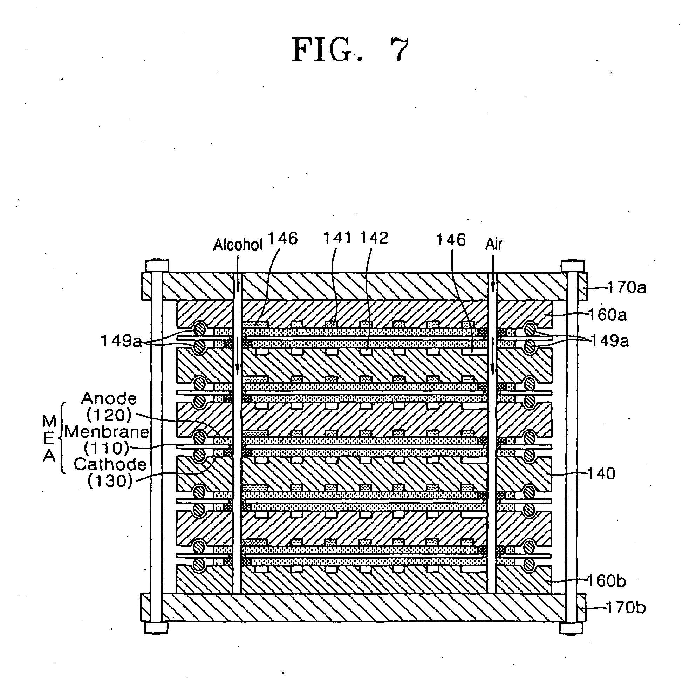

FIG. 7 is a cross-sectional view of a fuel cell stack according to an embodiment of the present invention.

Referring to FIG. 7, a plurality of MEAs are stacked in a fuel cell stack, and electric conductive bipolar plates are placed between the MEAs. Each MEA has an electrolyte membrane 110 having an anode on one of its faces and a cathode on the opposite face. Electric conductive end plates 160a and 160b are placed uppermost and lowermost of the fuel cell stack. Only one face of the electric conductive end plates 160a and 160b contacts the MEA, thus the one face of the electric conductive end plates 160a and 160b has the same structure as the bipolar plate 140 and operates in the same manner as the bipolar plate 140 The MEA, the bipolar plates 140 placed between the MEAs, and the conductive end plates 160a and 160b are fixed using fixing end plates 170a and 170b by screw binding.

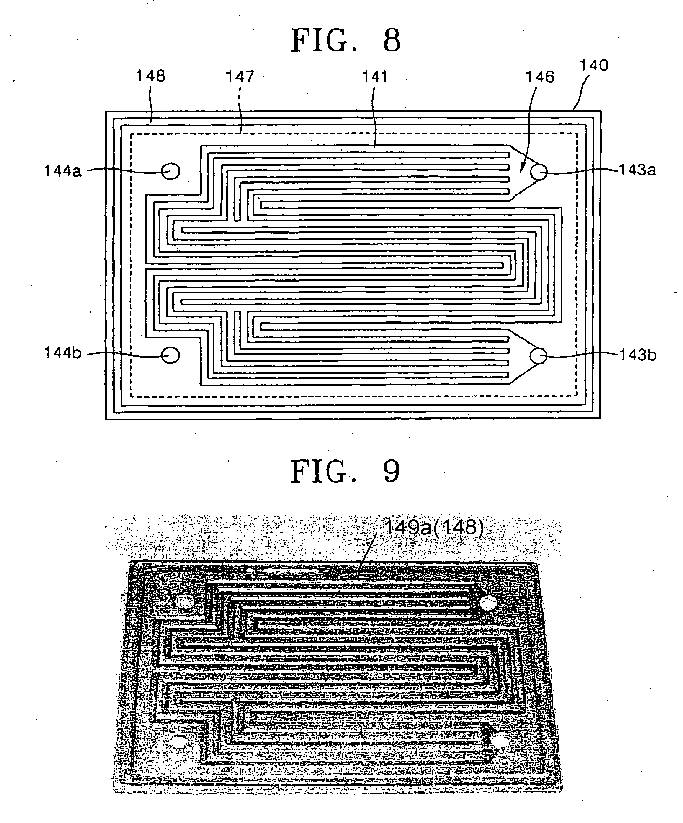

FIG. 8 is a plan view of the bipolar plate of FIG. 7;

Referring to FIG. 8, a square electrode region 147 where the MEA will be placed and a groove 148 enclosing the electrode region 147 are formed on the bipolar plate 140. The groove 148 is filled with a sealing material i.e., liquid silicon, to form a sealing member to seal gaps between the bipolar plates 140.

A plurality of fuel channels 141 having a serpentine shape and openings at their upper surface are formed with a predetermined depth at the electrode region 147. Also, fuel flow holes 143a and 143b are formed on the both ends of the fuel channels 141 through the bipolar plate 140.

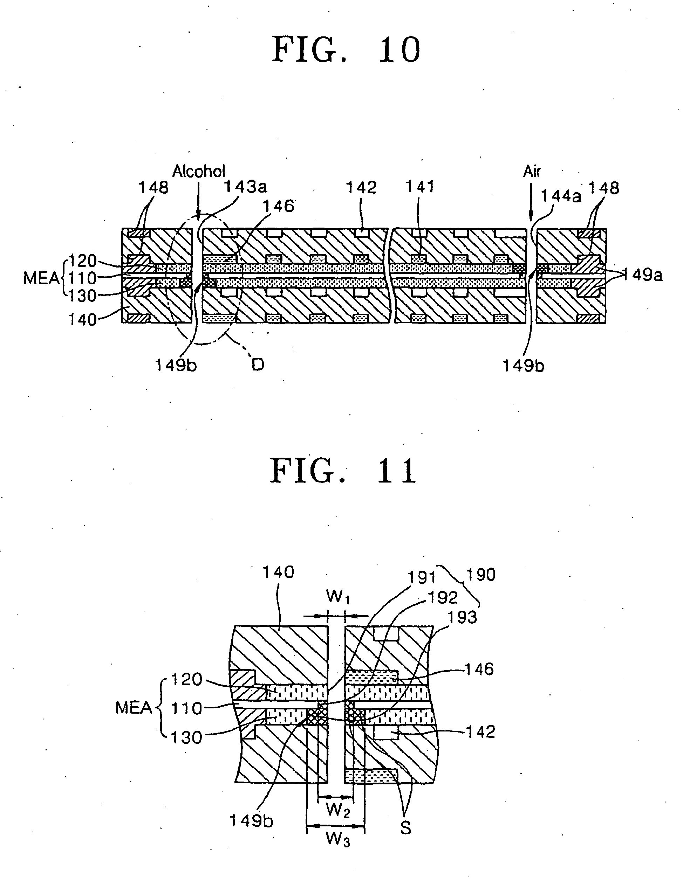

Reference numerals 144a and 144b refer to different fuel flow holes, i.e., oxygen inlet holes, which are connected to fuel channels 142 in FIG. 10 on the backside of the bipolar plate 140.

Reference numeral 146 indicates a conventional manifold which is connected to the plurality of fuel channels 141 exposing from the face of the bipolar plate 140. The upper face of the conventional manifold 146 and the fuel channel 141 are covered by the MEA when manufacturing a fuel cell stack. That is, the conventional manifold are formed inside a bipolar plate or covered by a gasket, however, the manifold in the present invention are covered by an electrode of MEA. Accordingly, there is an advantage in that the fuel is transferred to the electrode in the electrode region 147 without leaking outside the electrode region 147.

FIG. 9 is a photo of the bipolar plate of FIG. 7, which shows a groove 148 coated with liquid silicon 149a.

FIG. 10 is a cross-sectional view of a single cell showing a sealing structure from a fuel flow hole of FIG. 7 to the MEA, and FIG. 11 is a magnified drawing of D of FIG. 10.

Referring to FIGS. 10 and 11, a MEA of a single cell is placed between bipolar plates 140. Fuel channels 141 for supplying liquid fuel are formed on a face connecting to an anode 120, and fuel channels 142 for supplying oxygen are formed on the other face connecting to a cathode 130 of the bipolar plate 140. An electrolyte membrane 110 is interposed between the anode 120 and the cathode 130. These constitute the MEA.

Each MEA has holes 190 corresponding to the fuel flow holes 143a, 143b, 144a, and 144b of the bipolar plate 140. Also, holes corresponding to the fuel flow holes 143a, 143b, 144a, and 144b are formed on the anode 120, cathode 130, and the electrolyte membrane 110. Each electrode comprises a first electrode hole 191 communicating to the fuel flow channels 141 and 142 for flowing the liquid fuel or an oxidant, and a second electrode hole 193 not communicating to the fuel flow channel 141 or 142.

A diameter W1 of the fuel flow hole of the bipolar plate 140 is approximately 3 mm. A diameter of the first electrode hole 191 communicating to the fuel flow hole is approximately 3 mm. A diameter W3 of the second electrode hole 193, corresponding to the first electrode hole 191 and formed on an opposite electrode, is approximately 8 mm. A diameter W2 of the electrolyte membrane 110 formed between the first and the second electrode holes 191 and 193 is approximately 5 mm. Accordingly, two steps S are formed around the fuel flow holes of each MEA 190. These steps S are coated with a sealing material, such as silicon glue to form a sealing member 149b. The sealing member 149b seals an inner wall of the fuel flow hole preventing the fuel from penetrating into the second electrode 193 and the electrolyte membrane 110. In case of using alcohol fuel, the sealing member 149b prevents the alcohol fuel from permeating into the cathode 130 that degrades a performance of the fuel cell, and prevents useless fuel consumption.

Reference numeral 148 is a groove formed in an outer region of the electrode region 147, and reference numeral 149a is a sealing member filled in the groove 148. The sealing member not only seals the bipolar plate 140 having a thickness of approximately 1 mm, but also attaches the bipolar plates 140 to one another. [Therefore, a fuel cell stack according to the present invention is fabricated using a sealing member having a large adhesive force without using the end plates 170a and 170b.]

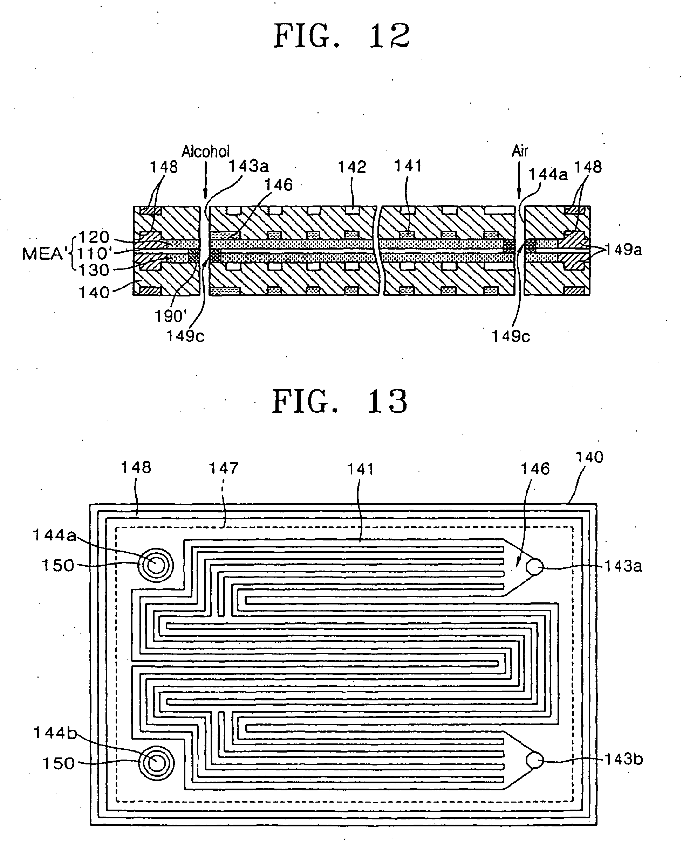

FIG. 12 is a cross-sectional view of another example of a sealing structure from the fuel flow hole 143a of FIG. 10 to the MEA. Elements identical to those of FIG. 10 and 11 are indicated using the same reference numerals.

Referring to FIG. 12, a MEA' of a single cell is placed between the bipolar plates 140. An electrolyte membrane 110' is interposed between an anode 120' and a cathode 130' constituting the MEA'.

Fuel flow holes are formed at each bipolar plate 140 and the MEA'. A diameter of the fuel flow hole of the bipolar plate 140 is approximately 3 mm, and a diameter of the corresponding holes 190' of the MEA' is approximately 8 mm. An inner wall of the MEA' hole is coated with a sealing member 149c, such as silicon glue, to prevent alcohol fuel from leaking into the electrolyte membrane 110' and the cathode 130. Thus, a performance degradation and useless consumption of fuel is prevented. To deposit the sealing member 149c, firstly, a liquid sealing material is deposited round the fuel flow holes of a bipolar plate 140 using an automatic dispenser. Next, MEA' and the bipolar plate 140 are assembled by disposing the liquid sealing material inside an inner surface of hole of MEA'.

FIG. 13 is a plan view of a bipolar plate 140 according to another embodiment of the present invention. The same reference numerals as in FIG. 8 are used to the same elements.

Referring to FIG. 13, a rectangular electrode region 147 where the MEA will be placed and a groove 148 enclosing the electrode region 147 are formed on the bipolar plate 140.

A plurality of fuel channels 141 having a serpentine shape exposing from a surface of the bipolar plate 140 are formed with a predetermined depth at the electrode region 147. Also, fuel flow holes 143a and 143b are formed on the both ends of the fuel channels 141 through the bipolar plate 140.

Grooves 150 with a predetermined depth are formed around the fuel flow holes 144a and 144b apart from the fuel channels 141 on the part of the bipolar plate 140. These grooves 150 are coated with a sealing member to prevent the fuel flow holes 144a and 144b from mixing with other fuel.

### [Example]

A polymer impregnated graphite block having dimensions of 75 mm W width x 50 mm L length x 1 mm D depth is prepared. Fuel channels are formed on both faces of the block, and fuel flow holes connecting to the fuel channel are formed perforating the block as depicted in FIG. 8. A groove enclosing the rectangular electrode region is formed, and then the groove is coated with liquid silicon using an automatic dispenser. FIG. 9 is a photo of a bipolar plate manufactured in this way.

Fuel holes 143a, 143b, 144a, and 144b are perforated on an electrolyte membrane 110 having a thickness of 120 µm, and an anode and a cathode having a thickness of 250 µm, respectively. A diameter of the fuel hole 192 of the electrolyte membrane 110 is 5 mm, a diameter of the hole of a first electrode hole 191, where fuel is supplied from the fuel flow holes 143a and 143b, is 3 mm, and a diameter of the hole of a second hole 193, where fuel is not supplied from the fuel flow holes 143a and 143b, is 8 mm. An assembly of the electrodes 120 and 130 and the electrolyte membrane 110 are formed vertically aligning the fuel flow holes 143a, 143b, 144a, and 144b. A MEA is then fabricated by hot pressing the assembly.

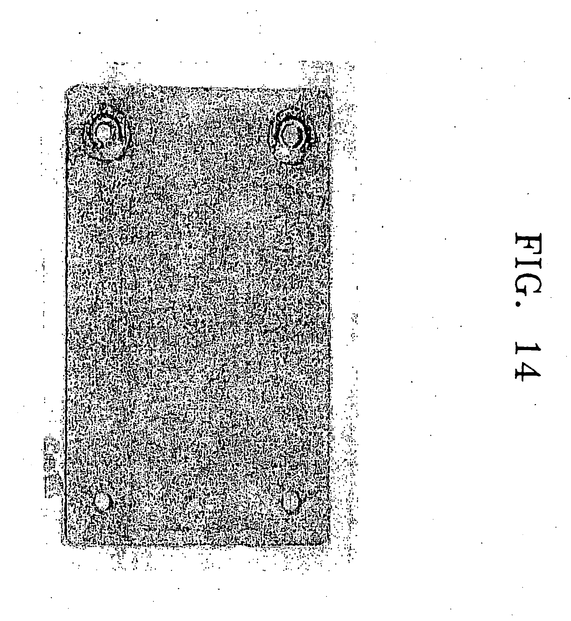

Next, at a surrounding of the two fuel flow holes of the MEA, liquid silicon is deposited on inner surfaces of the electrolyte membrane hole having the diameter of 5 mm and the second electrode having the diameter of 8 mm using an automatic dispenser. FIG. 14 is a photo of the MEA coated around fuel flow holes with liquid silicon. Each MEA coated with liquid silicon around the fuel flow holes is inserted between the thirteen bipolar plates in which the groove 148 is coated with liquid silicon. Afterward, end plates 170a and 170b bigger than the bipolar plates 140 are placed on and under the stack. Finally, a fuel cell stack is manufactured by compressing the stack using screws.

A sealing test of the manufactured fuel cell stack was performed by pumping methanol [at 1.5 bar] through the fuel supply hole, and air [at 1.5 bar] through the air supply hole, but no leakage was observed.

A direct liquid feed fuel cell stack according to the present invention has no fuel leakage problem because fuel flow holes are located in an electrode region and the manifold regions between the fuel flow holes to the fuel channels are covered by an electrode, and has no useless fuel consumption. A thin fuel cell stack is manufactured using a bipolar plate having a thickness of 1-2 mm.

While this invention has been particularly shown and described with reference to preferred embodiments thereof, it will be understood by those skilled in the art that various changes in form and details may be made therein without departing from the scope of the invention as defined by the appended claims.

## Claims

1. A direct liquid feed fuel cell stack comprising:
a plurality of stacked bipolar plates (140) having an electrode region (147) provided with fuel channels (141, 142), a plurality of fuel flow holes (143a, 143b, 144a, 144b) for supplying fuel or oxidant to the fuel channels (141), and a groove (148) enclosing the electrode region (147); and
a plurality of membrane electrode assemblies (MEA; MEA') arranged between the bipolar plates (140) in the electrode region (147), each membrane electrode assembly (MEA; MEA') comprising an electrolyte membrane (110; 110') and electrodes, the electrodes comprising an anode (120) and a cathode (130) on respective faces of the electrolyte membrane (110; 110'), the membrane electrode assembly (MEA; MEA') having holes (190; 190') in the electrolyte membrane (110; 110') and in the electrodes (120, 130) aligned with the fuel flow holes (143a, 143b, 144a, 144b) in the bipolar plates (140), wherein one of the electrodes holes (193, 190') aligned with each fuel flow hole (143a, 143b, 144a, 144b) is formed with a larger diameter (W₃) than the diameter of the respective fuel flow hole (W₁);
a first sealing member (149a) formed on the groove (148); and
a second sealing member (149b; 149c) formed on the walls of each electrode hole having the larger diameter (193, 190') so as to surround a respective fuel flow hole (143a, 143b, 144a, 144b), and so that the respective fuel flow hole (143a, 143b, 144a, 144b) does not communicate with the electrode hole having the larger diameter (193, 190').

2. The direct liquid feed fuel cell stack of claim 1, wherein the first sealing member (149a) is formed by depositing a liquid sealing material.

3. The direct liquid feed fuel cell stack of claim 1 or 2, wherein
ones of the fuel flow holes (143a, 144a) connect to other ones of the fuel flow holes (143b, 144b) by a plurality of the fuel channels (141),
manifolds (146) are formed between the fuel flow holes (143a, 143b, 144a, 144b) and the fuel channels (141), and
the upper parts of the fuel channels (141) and the manifolds (146) are covered by the anode (120) or the cathode (130).

4. The direct liquid feed fuel cell stack of claim 3, wherein grooves (150) are formed around the fuel flow holes (143a, 143b, 144a, 144b) not communicating with the fuel channels (141) on each face of the bipolar plate (140).

5. The direct liquid feed fuel cell stack of any one of the preceding claims, wherein uppermost and lowermost bipolar plates (140) have fuel channels (141) only on a face that contacts a membrane electrode assembly (MEM; MEM').

6. The direct liquid feed fuel cell stack of any one of the preceding claims, wherein each second sealing member (149b) is formed by depositing a liquid sealing material on a step (S), wherein the step (S) is formed by a diameter difference between the electrode hole (193) having the larger diameter (W₃) and the electrolyte membrane hole (192).

7. The direct liquid feed fuel cell stack of any one of claims 1 to 5, wherein a diameter (W₂) of each electrolyte membrane hole (192) is bigger than the diameter (W₁) of the respective fuel flow hole (143a, 143b, 144a, 144b), wherein the second sealing member (149b; 149c) that surrounds the fuel flow hole (143a, 143b, 144a, 144b) is formed on walls of the second electrode hole (193;190') and the electrolyte membrane hole (192; 190').

8. The direct liquid feed fuel cell stack of claim 7, wherein a diameter (W₂) of the electrolyte membrane hole (192) is smaller than the diameter (W₃) of the second electrode hole (193).

9. The direct liquid feed fuel cell stack of claim 8, wherein each second sealing member (149b) is formed by depositing a liquid sealing material on a step (S), and the step (S) is formed by a diameter difference between the second electrode hole (193), the electrolyte membrane hole (192), and the first electrode hole (191).

## Patentansprüche

1. Brennstoffzellenstapel mit direkter Flüssigbrennstoffzufuhr umfassend:
eine Mehrzahl von gestapelten bipolaren Platten (140) mit einem Elektrodenbereich (147), der mit Brennstoffkanälen (141, 142) versehen ist, einer Mehrzahl von Brennstoffdurchflussöffnungen (143a, 143b, 144a, 144b) zum Zuführen von Brennstoff oder Oxidationsmittel zu den Brennstoffkanälen (141) und eine Vertiefung (148), die den Elektrodenbereich (147) umschließt, und
eine Mehrzahl von Membranelektrodenanordnungen (MEA, MEA'), die zwischen den bipolaren Platten (140) im Elektrodenbereich (147) angeordnet sind, wobei jede Membranelektrodenanordnung (MEA, MEA') eine Elektrolytmembran (110, 110') und Elektroden umfasst, wobei die Elektroden eine Anode (120) und eine Kathode (130) auf jeweiligen Seiten der Elektrolytmembran (110, 110') umfassen, wobei die Membranelektrodenanordnung (MEA, MEA') Öffnungen (190, 190') in der Elektrolytmembran (110, 110') und in den Elektroden (120, 130) umfasst, die mit den Brennstoffdurchflussöffnungen (143a, 143b, 144a, 144b) in den bipolaren Platten (140) fluchten, wobei eine der Elektrodenöffnungen (193, 190'), die mit jeder Brennstoffdurchflussöffnung (143a, 143b, 144a, 144b) fluchten, mit einem größeren Durchmesser (W₃) ausgebildet ist als der Durchmesser der zugeordneten Brennstoffdurchflussöffnung (W₁),
ein erstes Versiegelungselement (149a), das auf der Vertiefung (148) ausgebildet ist, und
ein zweites Versiegelungselement (149b, 149c), das auf den Wänden jeder Elektrodenöffnung mit dem größeren Durchmesser (193, 190') so ausgebildet ist, dass es eine zugeordnete Brennstoffdurchflussöffnung (143a, 143b, 144a, 144b) umgibt, und so, dass die zugeordnete Brennstoffdurchflussöffnung (143a, 143b, 144a, 144b) nicht mit der Elektrodenöffnung mit dem größeren Durchmesser (193, 190') in Verbindung steht.

2. Brennstoffzellenstapel mit direkter Flüssigbrennstoffzufuhr nach Anspruch 1, wobei das erste Versiegelungselement (149a) durch Abscheiden eines flüssigen Versiegelungsmaterials gebildet ist.

3. Brennstoffzellenstapel mit direkter Flüssigbrennstoffzufuhr nach Anspruch 1 oder 2, wobei
ein Teil der Brennstoffdurchflussöffnungen (143a, 144a) mit anderen der Brennstoffdurchflussöffnungen (143b, 144b) durch eine Mehrzahl von Brennstoffkanälen (141) verbunden ist,
Verteiler (146) zwischen den Brennstoffdurchflussöffnungen (143a, 143b, 144a, 144b) und den Brennstoffkanälen (141) ausgebildet sind und
die oberen Teile der Brennstoffkanäle (141) und der Verteiler (146) von der Anode (120) oder der Kathode (130) bedeckt sind.

4. Brennstoffzellenstapel mit direkter Flüssigbrennstoffzufuhr nach Anspruch 3, wobei Vertiefungen (150) um die Brennstoffdurchflussöffnungen (143a, 143b, 144a, 144b) herum ausgebildet sind, die nicht mit den Brennstoffkanälen (141) auf jeder Seite der bipolaren Platte (140) in Verbindung stehen.

5. Brennstoffzellenstapel mit direkter Flüssigbrennstoffzufuhr nach einem der vorhergehenden Ansprüche, wobei oberste und unterste bipolare Platten (140) Brennstoffkanäle (141) nur auf einer Seite aufweisen, die mit einer Membranelektrodenanordnung (MEM, MEM') in Kontakt steht.

6. Brennstoffzellenstapel mit direkter Flüssigbrennstoffzufuhr nach einem der vorhergehenden Ansprüche, wobei jedes zweite Versiegelungselement (149b) durch Abscheiden eines flüssigen Versiegelungsmaterials auf einer Stufe (S) ausgebildet ist, wobei die Stufe (S) durch einen Durchmesserunterschied zwischen der Elektrodenöffnung (193) mit dem größeren Durchmesser (W₃) und der Elektrolytmembranöffnung (192) ausgebildet ist.

7. Brennstoffzellenstapel mit direkter Flüssigbrennstoffzufuhr nach einem der Ansprüche 1 bis 5, wobei ein Durchmesser (W₂) jeder Elektrolytmembranöffnung (192) größer ist als der Durchmesser (W₁) der zugeordneten Brennstoffdurchflussöffnung (143a, 143b, 144a, 144b), wobei das zweite Versiegelungselement (149b, 149c), das die Brennstoffdurchflussöffnung (143a, 143b, 144a, 144b) umgibt, auf Wänden der zweiten Elektrodenöffnung (193, 190') und der Elektrolytmembranöffnung (192, 190') gebildet ist.

8. Brennstoffzellenstapel mit direkter Flüssigbrennstoffzufuhr nach Anspruch 7, wobei ein Durchmesser (W₂) der Elektrolytmembranöffnung (192) kleiner ist als der Durchmesser (W₃) der zweiten Elektrodenöffnung (193).

9. Brennstoffzellenstapel mit direkter Flüssigbrennstoffzufuhr nach Anspruch 8, wobei jedes zweite Versiegelungselement (149b) durch Abscheiden eines flüssigen Versiegelungsmaterials auf einer Stufe (S) gebildet ist und die Stufe (S) durch einen Durchmesserunterschied zwischen der zweiten Elektrodenöffnung (193), der Elektrolytmembranöffnung (192) und der ersten Elektrodenöffnung (191) gebildet ist.

## Revendications

1. Empilement de piles à combustible à alimentation liquide directe comprenant :
une pluralité de plaques bipolaires empilées (140) ayant une région d'électrode (147) munie de canaux de combustible (141, 142), une pluralité de trous d'écoulement de combustible (143a, 143b, 144a, 144b) pour fournir un combustible ou un oxydant dans les canaux de combustibles (141), et une rainure (148) enfermant la région d'électrode (147) ; et
une pluralité d'ensembles membrane-électrodes (MEA ; MEA') agencés entre les plaques bipolaires (140) dans la région d'électrode (147), chaque ensemble membrane-électrodes (MEA ; MEA') comprenant une membrane électrolytique (110; 110') et des électrodes, les électrodes comprenant une anode (120) et une cathode (130) sur des faces respectives de la membrane électrolytique (110 ;110'), l'ensemble membrane-électrodes (MEA ; MEA') ayant des trous (190 ; 190') dans la membrane électrolytique (110 ; 110') et dans les électrodes (120, 130) alignés avec les trous d'écoulement de combustible (143a, 143b, 144a, 144b) dans les plaques bipolaires (140), dans lequel un des trous d'électrodes (193, 190') aligné avec chaque trou d'écoulement de combustible (143a, 143b, 144a, 144b) est formé avec un plus grand diamètre (W₃) que le diamètre du trou d'écoulement de combustible respectif (W₁) ;
un premier élément d'étanchéité (149a) formé sur la rainure (148); et
un second élément d'étanchéité (149b ; 149c) formé sur les parois de chaque trou d'électrode ayant le plus grand diamètre (193, 190') de façon à entourer un trou d'écoulement de combustible respectif (143a, 143b, 144a, 144b) et pour que le trou d'écoulement de combustible respectif (143a, 143b, 144a, 144b) ne communique pas avec le trou d'électrode ayant le plus grand diamètre (193, 190').

2. Empilement de piles à combustible à alimentation liquide directe selon la revendication 1, dans lequel le premier élément d'étanchéité (149a) est formé en déposant un matériau d'étanchéité liquide.

3. Empilement de piles à combustible à alimentation liquide directe selon la revendication 1 ou 2, dans lequel
une partie des trous d'écoulement de combustible (143a, 144a) sont reliés à l'autre partie des trous d'écoulement de combustible (143b, 144b) par une pluralité de canaux de combustible (141),
des collecteurs (146) sont formés entre les trous d'écoulement de combustible (143a, 143b, 144a, 144b) et les canaux de combustible (141), et
les parties supérieures des canaux de combustible (141) et des collecteurs (146) sont recouvertes par l'anode (120) ou la cathode (130).

4. Empilement de piles à combustible à alimentation liquide directe selon la revendication 3, dans lequel des rainures (150) sont formées autour des trous d'écoulement de combustible (143a, 143b, 144a, 144b) ne communiquant pas avec les canaux de combustible (141) sur chaque face de la plaque bipolaire (140).

5. Empilement de piles à combustible à alimentation liquide directe selon l'une quelconque des revendications précédentes, dans lequel les plaques bipolaires la plus haute et la plus basse (140) ont des canaux de combustible (141) uniquement sur une face qui est en contact avec un ensemble membrane-électrodes (MEM MEM').

6. Empilement de piles à combustible à alimentation liquide directe selon l'une quelconque des revendications précédentes, dans lequel chaque second élément d'étanchéité (149b) est formé en déposant un matériau d'étanchéité liquide sur un épaulement (S), dans lequel l'épaulement (S) est formé par une différence de diamètre entre le trou d'électrode (193) ayant le plus grand diamètre (W₃) et le trou de membrane électrolytique (192).

7. Empilement de piles à combustible à alimentation liquide directe selon l'une quelconque des revendications 1 à 5, dans lequel un diamètre (W₂) de chaque trou de membrane électrolytique (192) est plus grand que le diamètre (W₁) du trou d'écoulement de combustible respectif (143a, 143b, 144a, 144b), dans lequel le second élément d'étanchéité (149b ; 149c) qui entoure le trou d'écoulement de combustible (143a, 143b, 144a, 144b) est formé sur les parois du second trou d'électrode (193 ; 190') et du trou de membrane électrolytique (192 ; 190').

8. Empilement de piles à combustible à alimentation liquide directe selon la revendication 7, dans lequel un diamètre (W₂) du trou de membrane électrolytique (192) est inférieur au diamètre (W₃) du second trou d'électrode (193).

9. Empilement de piles à combustible à alimentation liquide directe selon la revendication 8, dans lequel chaque second élément d'étanchéité (149b) est formé en déposant un matériau d'étanchéité liquide sur un épaulement (S), et l'épaulement (S) est formé par une différence de diamètre entre le second trou d'électrode (193), le trou de membrane électrolytique (192) et le premier trou d'électrode (191).
